(19) Europäisches Patentamt
European Patent Office
Office européen des brevets

(11) **EP 0 651 707 B1**

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(21) Anmeldenummer: **94918364.4**

(22) Anmeldetag: **24.05.1994**

(51) Int. Cl.$^6$: **B60T 13/52**

(86) Internationale Anmeldenummer:
**PCT/EP94/01666**

(87) Internationale Veröffentlichungsnummer:
**WO 94/27850 (08.12.1994 Gazette 1994/27)**

(54) **UNTERDRUCK-BREMSKRAFTVERSTÄRKER**

VACUUM BRAKE SERVO

FREIN ASSISTE A DEPRESSION

(84) Benannte Vertragsstaaten:
**DE FR GB**

(30) Priorität: **26.05.1993 DE 4317490**

(43) Veröffentlichungstag der Anmeldung:
**10.05.1995 Patentblatt 1995/19**

(73) Patentinhaber: **ITT Automotive Europe GmbH**
**60488 Frankfurt (DE)**

(72) Erfinder:
• **JAKOBI, Ralf**
**D-65439 Flörsheim (DE)**
• **GRAICHEN, Kai-Michael**
**D-63225 Langen (DE)**

(56) Entgegenhaltungen:
**DD-A- 299 628       DE-A- 3 941 604**
**DE-A- 4 208 384     US-A- 4 282 799**

**Beschreibung**

Die Erfindung betrifft einen Unterdruck-Bremskraftverstärker mit einem Verstärkergehäuse, das durch eine mit einem pneumatischen Differenzdruck beaufschlagbare axial bewegliche Wand in eine Unterdruckkammer und eine Arbeitskammer dichtend unterteilt ist, sowie mit einem den Differenzdruck steuernden, in einem Steuergehäuse angeordneten Steuerventil, das durch einen mittels einer Kolbenstange verschiebbaren Ventilkolben betätigbar ist, der über eine elastische Reaktionsscheibe in kraftübertragender Verbindung mit einem Kraftabgabeglied (Druckstange) steht und durch einen mit der Kolbenstange zusammenwirkenden, im Steuergehäuse drehbar gelagerten ersten Kolbenteil sowie einen im Steuergehäuse verdrehgesichert geführten, an der Reaktionsscheibe anliegenden zweiten Kolbenteil gebildet ist, die relativ zueinander begrenzt axial bewegbar mittels einer Gewindeverbindung miteinander verbunden sind.

Bei der Serienfertigung von derartigen Unterdruck-Bremskraftverstärkern ist es erforderlich, den Abstand zwischen der Reaktionsscheibe und dem zweiten Kolbenteil, das sogenannte z-Maß, möglichst genau einzustellen, um die von der Automobilindustrie gewünschten Kennlinien zu erreichen. Das einzustellende z-Maß bestimmt dabei das Verhalten des Verstärkers in der Anfangsphase dessen Betätigung, insbesondere die Höhe des sprunghaften Anstiegs der Ausgangskraft bei der Betätigung mit einer vorher festgelegten Eingangskraft (sog. Springereffekt).

Ein Unterdruck-Bremskraftverstärker der eingangs genannten Gattung ist aus der DE 39 41 604 A1 bekannt. Die Einstellung des vorhin erwähnten z-Maßes erfolgt bei dem vorbekannten Bremskraftverstärker durch Änderung der axialen Baulänge des zweiteilig ausgebildeten Ventilkolbens, indem der erste Kolbenteil mittels eines geeigneten Werkzeugs gegenüber dem im Steuergehäuse verdrehgesichert geführten zweiten Kolbenteil gedreht wird.

Bei einem anderen einstellbaren Unterdruck-Bremskraftverstärker, der aus der nachveröffentlichten DE 42 08 384 A1 bekannt ist, erfolgt die Einstellung des gewünschten z-Maßes mittels einer mit dem ersten Kolbenteil permanent im Eingriff stehenden, koaxial zur Kolbenstange angeordneten Hülse, die nach dem beendeten Einstellvorgang durch ihre formschlüssige Verbindung mit dem Steuergehäuse verdrehgesichert wird. Die Verdrehsicherung erfolgt dabei vorzugsweise durch einen Sicherungsring, der auf die Hülse aufgesteckt wird und dessen radiale Vorsprünge in auf dem Innenumfang des Steuergehäuses ausgebildete Nuten eingreifen. Der Sicherungsring wird anschließend durch den Randbereich einer das Steuergehäuse schützenden elastischen Schutzkappe gehalten, der in einer in der Hülse ausgebildeten Umfangsnut eingeknöpft ist.

Weniger vorteilhaft ist bei dem vorbekannten einstellbaren Unterdruckbremskraftverstärker anzusehen, daß keine Möglichkeit einer Änderung des eingestellten z-Maßes im Kraftfahrzeug besteht.

Es ist daher Aufgabe der vorliegenden Erfindung, bei einem Unterdruck-Bremskraftverstärker der eingangs genannten Gattung Maßnahmen anzugeben, die eine stufenlose Verstellung des eingestellten z-Maßes bei komplett zusammengebautem, im Kraftfahrzeug bereits montiertem Gerät ermöglichen.

Diese Aufgabe wird erfindungsgemäß dadurch gelöst, daß mit dem ersten Kolbenteil eine koaxial zur Kolbenstange angeordnete rohrförmige Hülse im Eingriff steht, die an ihrem aus dem Steuergehäuse herausragenden Ende eine Verlängerung aufweist, die jederzeit ein Verdrehen der Hülse ermöglicht.

Vorteilhafte Weiterbildungen der Erfindung gehen aus den Unteransprüchen 2 bis 10 sowie der folgenden Beschreibung von zwei Ausführungsbeispielen im Zusammenhang mit der beiliegenden Zeichnung hervor. Dabei zeigt:

Fig. 1    einen erfindungsgemäßen Unterdruckbremskraftverstärker in der Ausgangsstellung im axialen Schnitt;

Fig. 2    den Unterdruckbremskraftverstärker nach Fig. 1 nach der Einstellung;

Fig. 3    eine zweite Ausführung des Erfindungsgegenstandes in vereinfachter Darstellung; und

Fig. 4    eine diagrammatische Darstellung der Abhängigkeit der Ausgangs- von der Eingangskraft des erfindungsgemäßen Unterdruckbremskraftverstärkers.

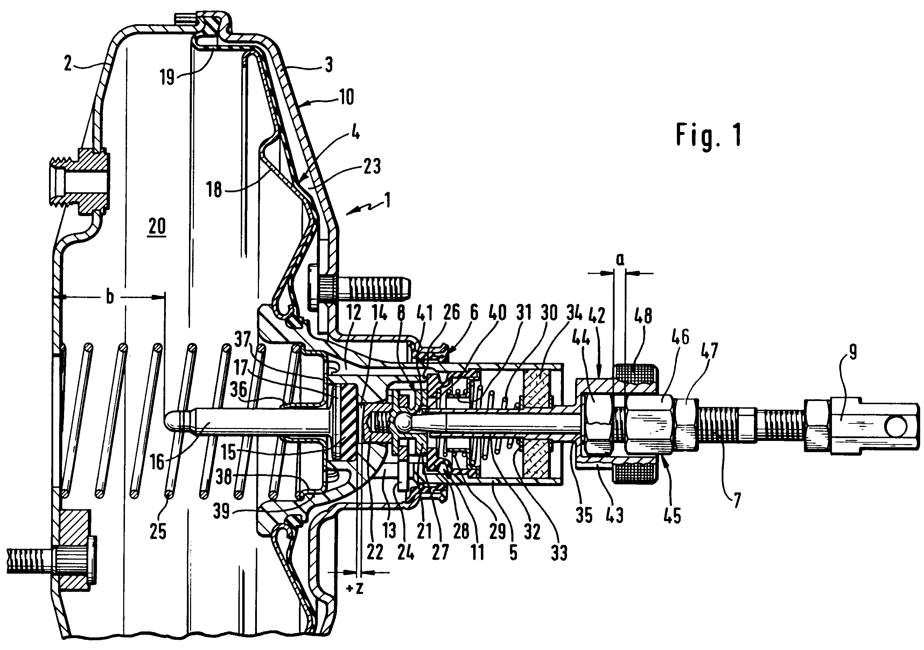

Das Verstärkergehäuse 10 des in Fig. 1 dargestellten erfindungsgemäßen Unterdruck-Bremskraftverstärkers 1 besteht aus zwei in einer Verbindungsebene miteinander lancierten Gehäuseteilen 2,3. Der Innenraum des Verstärkergehäuses 10 wird durch eine bewegliche Wand 4 in eine Unterdruckkammer 20, die über einen pneumatischen Anschluß mit einer Unterdruckquelle verbunden ist (nicht näher dargestellt), und eine Arbeitskammer 23 unterteilt.

Die durch einen metallischen Membranteller 18 sowie eine in der Arbeitskammer 23 daran anliegende Rollmembran 19 gebildete bewegliche Wand 4 ist an einem Steuergehäuse 5 befestigt, das mit einem Gleitführungsring 6 die Arbeitskammer 23 nach außen hin abdichtet.

Im Inneren des Steuergehäuses 5 ist eine aus Kolbenstange 7 und Ventilkolben 8 zusammengesetzte Steuerstange axial verschiebbar angeordnet, die über einen Gabelkopf 9 mit einem Bremspedal eines Kraftfahrzeuges verbindbar ist. Das Steuergehäuse 5 enthält ferner ein Steuerventil 11, das von dem Ventilkolben 8 betätigt wird und über Luftführungs-Kanäle 12,13 die Druckdifferenz zwischen Unterdruckkammer 20 und Arbeitskammer 23 steuert. Das Steuergehäuse 5 weist ferner eine Stufenbohrung 14 auf, in deren Abschnitt größeren Durchmessers eine Reaktionsscheibe 15 sowie ein Kopfflansch 17 einer Druckstange 16 angeordnet sind, die einen an der Stirnseite des Verstärkergehäuses 10 befestigten, nicht näher dargestellten Hauptbremszylinder betätigt.

Zum Zurückstellen der beweglichen Wand 4 ist eine Rückstellfeder 25 vorgesehen, die zwischen dem Steuergehäuse 5 und dem Boden des Verstärkergehäuses 10 bzw. 2 eingespannt ist.

Der Ventilkolben 8, der in der Lösestellung über ein Querglied 24 am Gleitführungsring 6 anschlägt, ist dabei vorzugsweise zweiteilig ausgebildet und besteht aus einem mit der Kolbenstange 7 verbundenen ersten Kolbenteil 21 sowie einem mittels einer Gewindeverbindung mit dem ersten Kolbenteil 21 verbundenen zweiten Kolbenteil 22, der verdrehgesichert in einem zweiten Abschnitt kleineren Durchmessers der Stufenbohrung 14 radial geführt axial verschiebbar angeordnet ist und dessen mit der Reaktionsscheibe 15 in Berührung stehende Fläche die Übersetzung des Bremsgerätes bestimmt. Der Abstand $z$ zwischen dem zweiten Kolbenteil 22 und der Reaktionsscheibe 15 stellt ein funktionswichtiges Maß des Bremskraftverstärkers dar, dessen Bedeutung im nachfolgenden Text näher erläutert wird.

Die Steuerbaugruppe des Unterdruck-Bremskraftverstärkers ist in der Bereitschaftsstellung dargestellt, d. h. in einer Stellung, in der die beiden Kammern 20,23 voneinander getrennt sind. In dieser Stellung liegen nämlich beide Dichtsitze 26,27 des Steuerventils 11 an der Dichtfläche eines Tellerventils 28 an, das in Richtung auf die beiden Dichtsitze 26,27 mittels einer Tellerventilfeder 29 vorgespannt ist, wobei der am ersten Kolbenteil 21 ausgebildete Dichtsitz 27 von einer Kolbenstangenrückholfeder 30 gegen das Tellerventil 28 gedrückt wird. Die Kolbenstangenrückholfeder 30 stützt sich mit einem Ende an einem hülsenförmigen Tellerventilhalter 31 ab, an dem gleichzeitig die Tellerventilfeder 29 abgestützt ist. Mit ihrem anderen Ende stützt sich die Kolbenstangenrückholfeder 30 anmittels einer ringförmiigen Scheibe 33 einer koaxial zur Kolbenstange 7 angeordneten rohrförmigen Hülse 32 ab, die einerseits mit dem ersten Kolbenteil 21 im Eingriff steht und andererseits an einem an der Kolbenstange 7 ausgebildeten Anschlag 35 axial anliegt. Die ringförmige Scheibe 33 dient dabei als Anlage für einen im Ansgaugbereich des Steuergehäuses 5 angeordneten Luftfilter 34.

Um eine präzise Führung der Druckstange 16 zu erzielen, ist eine Führungshülse 36 vorgesehen, deren radialer Flansch 37 sich am Steuergehäuse 5 abstützt und in eine zylindrische Führungsfläche 38 übergeht, die mit einem am Steuergehäuse 5 ausgebildeten zylindrischen Abschnitt 39 zusammenwirkt, so daß die auf die Druckstange 16 einwirkenden Biegekräfte wirksam aufgenommen werden. Der im Bereich der Mündung des Luftführungskanals 12 mit mehreren Öffnungen versehene radiale Flansch 37 wird gegen Herausfallen durch die Rückstellfeder 25 gesichert, die sich an einem an die zylindrische Führungsfläche 38 anschließenden radialen, näher nicht bezeichneten Kragen abstützt.

Zur Übertragung eines Drehmoment auf den ersten Kolbenteil 21 weist die Hülse 32 an ihrem dem Ventilkolben 21 zugewandten Ende zwei vorzugsweise radial gegenüberliegend angeordnete Vorsprünge bzw. Nasen 40 auf, die in entsprechende, im ersten Kolbenteil 21 vorgesehene Aussparungen bzw. Vertiefungen 41 einführbar sind und von denen in der Zeichnung lediglich ein Vorsprung bzw. eine Aussparung gezeigt sind. Um das vorhin erwähnte, zur Einstellung des z-Maßes erforderliche Drehmoment auf die Hülse 32 zu übertragen, weist sie auf ihrem dem Ventilkolben 8 abgewandten Ende eine Verlängerung 42 auf, die in eine radiale Erweiterung 43 übergeht, deren zylindrische Oberfläche mit einer Rändelung 48 versehen ist, so daß ein manuelles Verstellen bzw. Verdrehen der Hülse 32 ohne weiteres möglich ist. Die Erweiterung 43 nimmt dabei vorzugsweise Mittel zur Begrenzung des Verstellweges auf, die durch eine auf der Kolbenstange 7 axial begrenzt verstellbar angeordnete Stellmutter 44 sowie einen auf der Kolbenstange 7 begrenzt axial beweglich angeordneten Anschlag 45 gebildet sind. Der Anschlag 45 ist im dargestellten Beispiel durch eine auf die Kolbenstange 7 aufgeschraubte Anschlagmutter 46 gebildet, deren Position durch eine Kontermutter 47 gesichert werden kann.

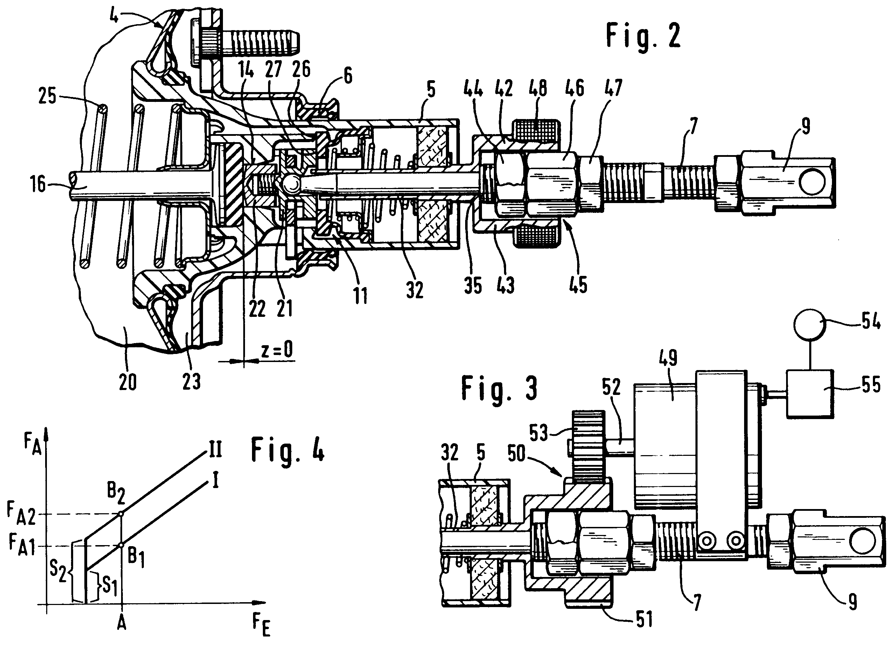

Bei der Einstellung des gewünschten Abstandes z, im in Fig. 2 dargestellten Beispiel z = O , wird von einer Grundstellung ausgegangen, in der sich der zweite Kolbenteil 22 in einem Abstand $+ z > O$ (Fig. 1), der einem großen "Springer" entspricht, von der Reaktionsscheibe 15 befindet und mit seinem anderen Ende am ersten Kolbenteil 21 anliegt, so daß die Hülse 32 nur in eine Richtung gedreht werden kann. Die Stellmutter 44 befindet sich dabei in einem Abstand (a) von der Anschlagmutter 46. Nach einer Evakuieren des Verstärkergehäuses 10 des erfindungsgemäßen Unterdruckbremskraftverstärkers wird zwischen einer Referenzfläche (bzw. der Oberfläche der vorderen Gehäusehälfte 2) und dem Ende der Druckstange 16 ein vorgegebener Abstand (b) eingestellt, wonach die Hülse 32 bei gleichzeitiger Messung des erwähnten Abstandes (b) solange gedreht wird, bis die zulässige Untergrenze dieses Abstandes erreicht wird. Durch das Drehen der Hülse 32 im Gegenuhrzeigersinn wird der zweiteilige Ventilkolben 8 länger und somit daß z-Maß kleiner. Anchließend wird die Anschlagmutter 46 zur Anlage an der Stellmutter 44 gebracht und in dieser Endstellung mittels der Kontermutter 47 fixiert bzw. gesichert. Das eingestellte z-Maß ist jedoch in den Bereich zwischen beiden Endlagen jederzeit varriierbar, so daß es beispielsweise denkbar ist, bei einem Austausch des dem Bremskraftverstärker nachgeschalteten, nicht gezeigten Hauptbremszylinders die vom Fahrzeughersteller vorgesehene Springerhöhe exakt einzustellen. Weiterhin kann die Erfindung bei der Festlegung der optimalen Springerhöhe genutzt werden. So kann die Bremsanlage eines und desselben Fahrzeuges innerhalb kürzester Zeit mit einem anderen Springer erprobt werden.

Bei den in Fig. 3 gezeigten Ausführungsbeispiel wird zum Verstellen der Hülse 32 ein Elektromotor 49 verwendet, der beispielsweise auf der Kolbenstange 7 angeordnet sein kann und die Hülse 32 über ein schematisch angedeutetes Getriebe 50 antreibt. Bei der gezeigten Ausführung ist sinnvoll, wenn die Verlängerung 42 bzw. die radiale Erweiterung 43 der Hülse 32 mit einer Verzahnung 51 versehen ist, die mit einem auf der Elektromotorwelle 52 angeordneten Ritzel 53 zusammenwirkt und somit einen Teil des erwähnten Getriebes 50 bildet. Denkbar ist jedoch eine Ausführung, bei der der Elektromotor koaxial zur Hülse 32 angeordnet ist und die Hülse 32 ohne Zwischenschaltung des Getriebes direkt antreibt.

Bei einem elektromotorischen Antrieb der Hülse 32 kann es besonders vorteilhaft sein, den Elektromotor 49 in Abhängigkeit vom Beladungszustand des Fahrzeuges anzusteuern. Zu diesem Zweck ist im Fahrzeug ein die Beladung des Fahrzeuges erfassender Beladungssensor vorgesehen, der in Fig. 3 lediglich schematisch dargestellt und mit dem Bezugszeichen 54 versehen ist. Die Ausgangssignale des Beladungssensors 54 werden einer Auswerteelektronik 55 zugeführt, durch deren Steuersignale die Ansteuerung des Elektromotors 49 erfolgt.

Mißt der Beladungssensor eine niedrigere Belastung des Fahrzeuges, so wird, elektronisch geregelt, ein kleines z-Maß eingestellt, dem der in Fig. 4 dargestellte niedrigere Springer $S_1$ entspricht. Mißt der Beladungssensor 54 dagegen eine höhere Belastung des Fahrzeuges, so wird ein höherer Springer ($S_2$) eingestellt. Dadurch wird erreicht, daß bei einer Betätigungskraft (A) bei weniger beladenem Fahrzeug vom Bremskraftverstärker die dem Punkt $B_1$ auf der ersten Charakteristik I entsprechende Ausgangskraft $F_{A1}$ azufgebracht wird, während bei höher beladenem Fahrzeug bei gleicher Betätigungskraft (A) eine dem Punkt $B_2$ auf der Charakteristik II entsprechende Ausgangskraft $F_{A2}$ aufgebracht wird. Durch die Änderung der Springerhöhe stellt sich ein Effekt ein, der dem einer variablen Übersetzung des Gerätes entspricht. Man kann damit also unabhängig von der Beladung bei nahezu gleicher Betätigungskraft die gleiche Verzögerung erreichen. Im Rahmen des vorliegenden Erfindungsgedankens wäre es auch denkbar, den Elektromotor 49 in Abhängigkeit von der erreichten Springerhöhe elektronisch geregelt anzusteuern.

## Bezugszeichenliste

| 1 | Unterdruck-Bremskraftverstärker |
|---|---|
| 2 | Verstärkergehäuseteil |
| 3 | Verstärkergehäuseteil |
| 4 | bewegliche Wand |
| 5 | Steuergehäuse |
| 6 | Gleitführungsring |
| 7 | Kolbenstange |
| 8 | Ventilkolben |
| 9 | Gabelkopf |
| 10 | Verstärkergehäuse |
| 11 | Steuerventil |
| 12 | Luftführungskanal |
| 13 | Luftführungskanal |
| 14 | Stufenbohrung |
| 15 | Reaktionsscheibe |
| 16 | Druckstange |
| 17 | Kopfflansch |
| 18 | Membranteller |
| 19 | Rollmembran |
| 20 | Unterdruckkammer |
| 21 | erster Kolbenteil |
| 22 | zweiter Kolbenteil |
| 23 | Arbeitskammer |
| 24 | Querglied |
| 25 | Rückstellfeder |
| 26 | Dichtsitz |
| 27 | Dichtsitz |
| 28 | Tellerventil |
| 29 | Tellerventilfeder |
| 30 | Kolbenstangenrückholfeder |
| 31 | Tellerventilhalter |
| 32 | Hülse |
| 33 | Scheibe |
| 34 | Luftfilter |
| 35 | Anschlag |
| 36 | Führungshülse |
| 37 | Flansch |
| 38 | Führungsfläche |
| 39 | Abschnitt |
| 40 | Vorsprung, Nase |
| 41 | Aussparung, Vertiefung |
| 42 | Verlängerung |
| 43 | Erweiterung |
| 44 | Stellmutter |
| 45 | Anschlag |
| 46 | Anschlagmutter |
| 47 | Kontermutter |
| 48 | Rändelung |
| 49 | Elektromotor |
| 50 | Getriebe |
| 51 | Verzahnung |
| 52 | E-Motor-Welle |
| 53 | Ritzel |
| 54 | Beladungssensor |
| 55 | Auswerteelektronik |

## Patentansprüche

1. Unterdruck-Bremskraftverstärker mit einem Verstärkergehäuse (10), das durch eine mit einem pneumatischen Differenzdruck beaufschlagbare axial bewegliche Wand (4) in eine Unterdruckkammer (20) und eine Arbeitskammer (23) dichtend unterteilt ist, sowie mit einem den Differenzdruck steuernden, in einem Steuergehäuse (5) angeordneten Steuerventil (11), das durch einen mittels einer Kolbenstange (7) verschiebbaren Ventilkolben (8) betätigbar ist, der über eine elastische Reaktionsscheibe (15) in kraftübertragender Verbindung mit einem Kraftabgabeglied (16) steht und durch einen mit der Kolbenstange (7) zusammenwirkenden, im Steuergehäuse (5) drehbar gelagerten ersten Kolbenteil (21) sowie einen im Steuergehäuse (5) verdrehgesichert geführten, an der Reaktionsscheibe (15) anliegenden zweiten Kolbenteil (22) gebildet ist, die relativ zueinander begrenzt axial bewegbar mittels einer Gewindeverbindung miteinander verbunden sind, dadurch **gekennzeichnet**, daß mit dem ersten Kolbenteil (21) eine koaxial zur Kolbenstange (7) angeordnete rohrförmige Hülse (32) im Eingriff steht, die an ihrem aus dem Steuergehäuse (5) herausragenden Ende eine Verlängerung (42) aufweist, die jederzeit ein Verdrehen der Hülse (32) ermöglicht.

2. Unterdruck-Bremskraftverstärker nach Anspruch 1, dadurch **gekennzeichnet**, daß die Verlängerung (42) mit Mitteln (43,48 versehen ist die ein manuelles Verstellen der Hülse (32) ermöglichen.

3. Unterdruck-Bremskraftverstärker nach Anspruch 1, dadurch **gekennzeichnet**, daß die Verlängerung (42) mit Mitteln (49,50,51,52,53) versehen ist, die ein elektromechanisches Verstellen der Hülse (32) ermöglichen.

4. Unterdruck-Bremskraftverstärker nach Anspruch 3, dadurch **gekennzeichnet**, daß die Mittel durch einen Elektromotor (49) gebildet sind, der die Hülse (32) antreibt.

5. Unterdruck-Bremskraftverstärker nach Anspruch 4, dadurch **gekennzeichnet**, daß der Elektromotor (49) koaxial zur Hülse (32) angeordnet ist.

6. Unterdruck-Bremskraftverstärker nach Anspruch 4 oder 5, dadurch **gekennzeichnet**, daß Mittel (54) vorgesehen sind, die eine Ansteuerung des Elektromotors (49) in Abhängigkeit vom Beladungszustand des Fahrzeuges ermöglichen.

7. Unterdruck-Bremskraftverstärker nach Anspruch 6, dadurch **gekennzeichnet**, daß die Mittel durch einen Beladungssensor (54) gebildet sind, der mit einer Auswerteelektronik (55) zusammenwirkt, deren Steuersignale der Ansteuerung des Elektromotors (49) dienen.

8. Unterdruck-Bremskraftverstärker nach der vorgehergehenden Ansprüche, dadurch **gekennzeichnet**, daß die Hülse (32) an ihrem Ende eine radiale Erweiterung (43) aufweist, die Mittel (44-47) zur Begrenzung des Verstellbereichs aufnimmt.

9. Unterdruck-Bremskraftverstärker nach Anpruch 8, dadurch **gekennzeichnet**, daß die Mittel zur Begrenzung des Verstellbereichs durch eine auf der Kolbenstange (7) bergenzt axial verstellbar angeordnete Stellmutter (44) gebildet sind, die mit einem an der Kolbenstange (7) ausgebildeten Anschlag (45) zusammenwirkt.

10. Unterdruck-Bremskraftverstärker nach Anspruch 9, dadurch **gekennzeichnet**, daß der Anschlag (45) an der Kolbenstange (7) axial verstellbar ausgebildet und beispielsweise durch eine Anschlagmutter (46) gebildet ist, die durch eine Kontermutter (47) gegen axiales Verstellen gesichert ist.

11. Unterdruck-Bremskraftverstärker nach Anspruch 8 bis 10, und 4, 6 oder 7, dadurch **gekennzeichnet**, daß die Erweiterung (43) als Teil eines zwischen der Hülse (32) und dem Elektromotor (49) angeordneten Getriebes (50) ausgeführt ist.

**Claims**

1. A vacuum brake power booster including a booster housing (10) which is sealingly subdivided by an axially movable wall (4) into a vacuum chamber (20) and a power chamber (23), the wall (4) being subjectible to a pneumatic pressure differential, and a control valve (11) which controls the pressure differential and is accommodated within a control housing (5) and actuatable by a valve piston (8), that is slidable by means of a piston rod (7) and is in a force-transmitting connection with a force-delivering member (16) through an elastic reaction disc (15), the valve piston including a first piston part (21) which interacts with the piston rod (7) and is rotatably supported within the control housing (5), and a second piston part (22) which is guided within the control housing (5) so as to be secured against rotation and is in abutment against the reaction disc (15), the first and second piston parts being coupled to each other by means of a threaded union so as to be movable relative to each other within limits in an axial direction, **characterized** in that a tubular sleeve (32) which is arranged coaxially to the piston rod (7) is in engagement with the first piston part (21), the sleeve (32) having an extension (42) at its end projecting from the control housing (5) which permits rotation of the sleeve (32).

2. A vacuum brake power booster as claimed in claim 1, **characterized** in that the extension (42) includes means (43, 48) for permitting manual adjustment of the sleeve (32).

3. A vacuum brake power booster as claimed in claim 1,

**characterized** in that the extension (42) includes means (49, 50, 51, 52, 53) for permitting the electromechanical adjustment of the sleeve (32).

4. A vacuum brake power booster as claimed in claim 3,
**characterized** in that the means comprises an electric motor (49) which drives the sleeve (32).

5. A vacuum brake power booster as claimed in claim 4,
**characterized** in that the electric motor (49) is arranged coaxially to the sleeve (32).

6. A vacuum brake power booster as claimed in claim 4 or claim 5,
**characterized** by further comprising means (54) for permitting actuation of the electric motor (49) in response to the load condition of the vehicle.

7. A vacuum brake power booster as claimed in claim 6,
**characterized** in that the means includes a load sensor (54) which cooperates with an evaluating electronics (55) that produces control signals to actuate the electric motor (49).

8. A vacuum brake power booster as claimed in any one of the preceding claims,
**characterized** in that the sleeve (32) has a radially enlarged portion (43) at its end to receive means (44 to 47) for limiting the range of adjustment.

9. A vacuum brake power booster as claimed in claim 8,
**characterized** in that the means for limiting the range of adjustment comprises a check nut (44) which is arranged on the piston rod (7) so as to be adjustable within limits in an axial direction and interacts with a stop (45) provided on the piston rod (7).

10. A vacuum brake power booster as claimed in claim 9,
**characterized** in that the stop (45) on the piston rod (7) is axially adjustable, the stop taking the form of a stop nut (46), for example, which is secured against axial re-adjustment by a counter nut (47).

11. A vacuum brake power booster as claimed in claims 8 to 10, and claims 4, 6 or 7,
**characterized** in that the enlarged portion (43) is part of a gear unit (50) positioned between the sleeve (32) and the electric motor (49).

**Revendications**

1. Dispositif d'assistance de freinage à dépression, avec un boîtier de servofrein (10) qui est divisé en étanchéité en une chambre de dépression (20) et une chambre de travail (23) par une cloison axialement mobile (4) pouvant être sollicitée par une pression différentielle pneumatique, ainsi qu'avec une soupape de commande (11) disposée dans un boîtier de commande (5) et commandant la pression différentielle, soupape qui peut être actionnée par un piston de soupape (8), qui peut être déplacé au moyen d'une tige de piston (7), est relié en transmission de force à un organe de délivrance de force (16) par l'intermédiaire d'une rondelle de réaction élastique (15), et est constitué d'une première partie de piston (21) montée à rotation dans le boîtier de commande (5) et coopérant avec la tige de piston (7), ainsi que d'une deuxième partie de piston (22) guidée sans possibilité de rotation dans le boîtier de commande (5) et s'appliquant contre la rondelle de réaction (15), les deux parties de piston à déplacement axial limité l'une par rapport à l'autre étant mutuellement reliées au moyen d'un assemblage fileté, **caractérisé** en ce qu'un manchon tubulaire (32), disposé coaxialement à la tige de piston (7), est en engagement avec la première partie de piston (21), manchon qui présente, à son extrémité dépassant hors du boîtier de commande (5), un prolongement (42) qui permet à tout moment une rotation relative du manchon (32).

2. Dispositif d'assistance de freinage à dépression selon la revendication 1, **caractérisé** en ce que le prolongement (42) est pourvu de moyens (43, 48) qui permettent un réglage manuel du manchon (32).

3. Dispositif d'assistance de freinage à dépression selon la revendication 1, **caractérisé** en ce que le prolongement (42) est pourvu de moyens (49, 50, 51, 52, 53) qui permettent un réglage électromécanique du manchon (32).

4. Dispositif d'assistance de freinage à dépression selon la revendication 3, **caractérisé** en ce que les moyens sont formés par un moteur électrique (49) qui entraîne le manchon (32).

5. Dispositif d'assistance de freinage à dépression selon la revendication 4, **caractérisé** en ce que le moteur électrique (49) est disposé coaxialement au manchon (32).

6. Dispositif d'assistance de freinage à dépression selon la revendication 4 ou 5, **caractérisé** en ce que des moyens (54) sont prévus, qui permettent un asservissement du moteur électrique (49) en fonction de l'état de charge du véhicule.

7. Dispositif d'assistance de freinage à dépression selon la revendication 6, **caractérisé** en ce que les moyens sont formés par un capteur de charge (54), qui coopère avec une unité électronique d'évaluation (55) dont les signaux de commande servent à l'asservissement du moteur électrique (49).

8. Dispositif d'assistance de freinage à dépression selon l'une quelconque des revendications précédentes, **caractérisé** en ce que le manchon (32) présente à son extrémité un élargissement radial (43) qui reçoit des moyens (44-47) pour limiter la plage de réglage.

9. Dispositif d'assistance de freinage à dépression selon la revendication 8, **caractérisé** en ce que les moyens pour limiter la plage de réglage sont formés par un écrou de réglage (44) disposé à déplacement axial limité sur la tige de piston (7), écrou qui coopère avec une butée (45) configurée sur la tige de piston (7).

10. Dispositif d'assistance de freinage à dépression selon la revendication 9, **caractérisé** en ce que la butée (45) est conçue à déplacement axial sur la tige de piston (7) et est formée, par exemple, par un écrou de butée (46) qui est bloqué en déplacement axial par un contre-écrou (47).

11. Dispositif d'assistance de freinage à dépression selon l'une quelconque des revendications 8 à 10 et 4, 6 ou 7, **caractérisé** en ce que l'élargissement (43) est conçu comme élément d'une transmission (50) disposée entre le manchon (32) et le moteur électrique (49).

Fig. 1

EP 0 651 707 B1

Fig. 2

Fig. 3

Fig. 4

EP 0 651 707 B1